# EUROPEAN PATENT SPECIFICATION

(11) **EP 3 475 085 B1**
(45) Date of publication and mention of the grant of the patent: **05.07.2023**
(21) Application number: 17732725.1
(22) Date of filing: 20.06.2017
(51) Int. Cl.: B32B 27/08, B32B 27/18, B32B 27/32

(54) **MULTILAYER FILMS AND PACKAGES FORMED FROM SAME**
MEHRSCHICHTIGE FOLIEN UND DARAUS GEFORMTE VERPACKUNGEN
FILMS MULTICOUCHES ET EMBALLAGES FORMÉS À PARTIR DE CEUX-CI

(30) Priority: 22.06.2016 EP 16175831
(43) Date of publication of application: 01.05.2019
(73) Proprietor: Dow Global Technologies LLC, Midland, MI 48674 (US)
(72) Inventor: CHIRINOS, Carolina, 43006 Tarragona (ES); HILL, Martin, 43006 Tarragona (ES); PARKINSON, Shaun, 43006 Tarragona (ES)
(74) Representative: Boult Wade Tennant LLP
(86) International application number: PCT/US2017/038226
(87) International publication number: WO 2017/223021

(56) References cited:
- WO-A1-00/04089
- JP-A- H0 545 803
- JP-A- H0 667 358
- US-A- 5 492 741

## Description

### Field

The present invention relates to multilayer films and to packages formed from such multilayer films.

### Introduction

A number of factors are important in designing films for packages including factors associated with manufacture of the films, formation of the package, the appearance of the package, the contents (if any of the package), and others. For example, when making a package from a multilayer film having an outer polyethylene layer using a form, fill, and seal packaging line, care must be taken not to run the seal bars at too high of a temperature, or for too long, to avoid melting and sticking of the polyethylene outer layer to the seal bars. One approach to avoiding this problem is to use an outer layer that comprises a material with a higher melting point such as polyethylene terephthalate or oriented polypropylene. However, when the remainder of the multilayer film is polyethylene-based, which may be desirable for some applications, the outer layer must be laminated to the polyethylene layer(s). Such an approach is not optimal for recyclability. Another approach is to reduce the temperature exposure of an outer polyethylene layer by incorporating a sealant resin with a very low heat seal initiation temperature. However, such an approach may result in a package with less desirable thermal properties. Yet another common approach is to apply a surface lacquer to the polyethylene to provide the necessary heat resistance; however such an approach requires an additional process step. Other approaches result in a deterioration of optical properties.

JP H06 67358 relates to a packaging material for photographic sensitive material and light shielding bag using the same.

JP H05 45803A relates to laminated film.

US 5492741A relates to a packaging material for photographic photosensitive materials.

WO 00/04089A relates to a method for improving hot tack in blown polyethylene films.

There remains a need for new multilayer films having polyethylene-based outer layers that provide desirable optical properties and enhanced temperature resistance.

### Summary

The present invention provides multilayer films that in some aspects provide a combination of thermal properties and optical properties suitable for packaging and other applications. In particular, multilayer films, in some embodiments of the present invention, comprise a polyethylene-based outer layer that improves optical properties and provides an unexpected, significant increase in heat resistance during a sealing operation (e.g., during formation of a package using a form, fill, and seal process). Other advantages exhibited by some embodiments of the present invention can include the provision of a polyethylene-based package, such as a stand-up pouch, that can be recycled, the provision of a polyethylene-based package, such as a stand-up pouch, with desirable optical properties (e.g., high surface gloss, low haze, etc.), and the provision of shrink films and stretch hood films.

In one aspect, the present invention provides a multilayer film that comprises an outer layer, wherein the outer layer means that one surface of the outer layer is an outermost surface of the film, the outer layer comprising:
a polyethylene having a density of 0.930 g/cm³ or greater; and
0.01 to 1 weight percent of an additive based on the total weight of the outer layer, the additive comprising:
   (i) a sorbitol acetal derivative comprising the structure of formula (I): 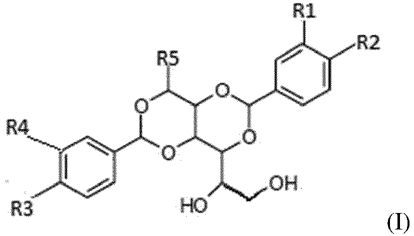 wherein R1-R5 in formula (I) comprise the same or different moieties chosen from hydrogen and a C₁-C₃ alkyl; or
   (ii) a bisamide comprising a structure of formulas (II), (III), or (IV): 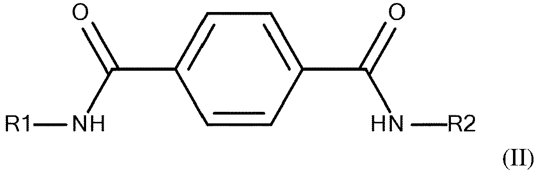 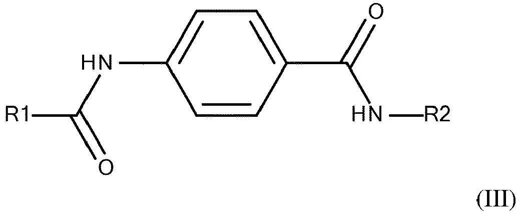 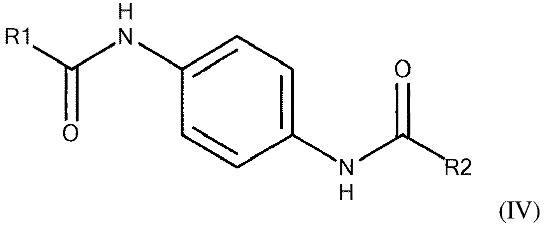
wherein R1 and R2 in formulas (II), (III), and (IV) comprise the same or different moieties chosen from: C₁-C₂₀ alkyl unsubstituted or substituted by one or more hydroxy; C₄-C₂₀ alkenyl unsubstituted or substituted by one or more hydroxy; C₂-C₂₀ alkyl interrupted by oxygen or sulfur; C₃-C₁₂ cycloalkyl unsubstituted or substituted by one or more C₁-C₂₀ alkyl; (C3-C₁₂ cycloalkyl)-C₁-C₁₀ alkyl unsubstituted or substituted by one or more C₁-C₂₀ alkyl; bis[C₃-C₁₂ cycloalkyl]-C₁-C₁₀ alkyl unsubstituted or substituted by one or more C₁-C₂₀ alkyl; a bicyclic or tricyclic hydrocarbon radical with 5 to 20 carbon atoms unsubstituted or substituted by one or more C₁-C₂₀ alkyl; phenyl unsubstituted or substituted by one or more radicals selected from C₁-C₂₀ alkyl, C₁-C₂₀ alkoxy, C₁-C₂₀ alkylamino, di(C₁-C₂₀ alkyl)amino, hydroxy and nitro; phenyl-C₁-C₂₀ alkyl unsubstituted or substituted by one or more radicals selected from C₁-C₂₀ alkyl, C₃-C₁₂ cycloalkyl, phenyl, C₁-C₂₀ alkoxy and hydroxy; phenylethenyl unsubstituted or substituted by one or more C₁-C₂₀ alkyl; biphenyl-(C₁-C₁₀ alkyl) unsubstituted or substituted by one or more C₁-C₂₀ alkyl; naphthyl unsubstituted or substituted by one or more C₁-C₂₀ alkyl;
naphthyl-C₁-C₂₀ alkyl unsubstituted or substituted by one or more C₁-C₂₀ alkyl;
naphthoxymethyl unsubstituted or substituted by one or more C₁-C₂ alkyl;
biphenylenyl, flourenyl, anthryl; a 5-to-6-membered heterocylic radical unsubstituted or substituted by one or more C₁-C₂₀ alkyl; a C₁-C₂₀ hydrocarbon radical containing one or more halogen; or tri(C₁-C₁₀ alkyl)silyl(C₁-C₁₀ alkyl) dibenzylidene sorbitol;
wherein the outer layer has a 50% seal strength temperature at least 10° C greater than an outer layer in a comparative film that differs only in the absence of the additive in the outer layer, when sealed to itself at a pressure of 5 bar with a dwell time of 0.5 seconds; and
wherein the film has a gloss of at least 30 at 45° as measured based on ASTM D2457; wherein density and seal strength are measured in accordance with the description.

In another aspect, the present invention relates to a package comprising any of the multilayer films disclosed herein. In some embodiments, the package is a stand-up pouch.

In another aspect, the present invention relates to a shrink film comprising any of the multilayer films disclosed herein. The present invention, in another aspect, relates to a stretch hood film comprising any of the multilayer films disclosed herein.

These and other embodiments are described in more detail in the Detailed Description.

### Detailed Description

Unless stated to the contrary, implicit from the context, or customary in the art, all parts and percents are based on weight, all temperatures are in ° C, and all test methods are current as of the filing date of this disclosure.

The term "composition," as used herein, includes material(s) which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities may be incorporated into and/or within the polymer.

The term "interpolymer," as used herein, refers to a polymer prepared by the polymerization of at least two different types of monomers. The generic term interpolymer thus includes copolymers (employed to refer to polymers prepared from two different types of monomers), and polymers prepared from more than two different types of monomers.

"Polyethylene" or "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392, which is hereby incorporated by reference). LDPE resins typically have a density in the range of 0.916 to 0.940 g/cm³.

The term "LLDPE", includes resins made using the traditional Ziegler-Natta catalyst systems as well as single-site catalysts such as bis-metallocenes (sometimes referred to as "m-LLDPE"), post-metallocene catalysts, and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art, with gas and slurry phase reactors being most preferred.

The term "MDPE" refers to polyethylenes having densities from 0.926 to 0.940 g/cm³. "MDPE" is typically made using chromium or Ziegler-Natta catalysts or using metallocene, constrained geometry, or single site catalysts, and typically have a molecular weight distribution ("MWD") greater than 2.5.

The term "HDPE" refers to polyethylenes having densities greater than about 0.940 g/cm³, which are generally prepared with Ziegler-Natta catalysts, chrome catalysts, post-metallocene catalysts, or constrained geometry catalysts.

The term "ULDPE" refers to polyethylenes having densities of 0.880 to 0.912 g/cm³, which are generally prepared with Ziegler-Natta catalysts, single-site catalysts including, but not limited to, bis-metallocene catalysts and constrained geometry catalysts, and post-metallocene, molecular catalysts.

"Multimodal" means resin compositions which can be characterized by having at least two distinct peaks in a GPC chromatogram showing the molecular weight distribution. Multimodal includes resins having two peaks as well as resins having more than two peaks.

"Polypropylene" or "propylene-based polymer" refers to polymers comprising greater than 50% by weight of units which have been derived from propylene monomer. This includes propylene homopolymer, random copolymer polypropylene, impact copolymer polypropylene, propylene/a-olefin interpolymer, and propylene/a-olefin copolymer. These polypropylene materials are generally known in the art. "Polypropylene" also includes the relatively newer class of polymers known as propylene based plastomers or elastomers ("PBE" or "PBPE"). These propylene/alpha-olefin copolymers are further described in detail in U.S. Patent Nos. 6,960,635 and 6,525,157, incorporated herein by reference. Such propylene/alpha-olefin copolymers are commercially available from The Dow Chemical Company, under the tradename VERSIFY^{™}, or from ExxonMobil Chemical Company, under the tradename VISTAMAXX^{™}.

The term, "propylene/α-olefin interpolymer," as used herein, refers to an interpolymer that comprises, in polymerized form, a majority amount of propylene monomer (based on the weight of the interpolymer), and an α-olefin.

The term, "propylene/α-olefin copolymer," as used herein, refers to a copolymer that comprises, in polymerized form, a majority amount of propylene monomer (based on the weight of the copolymer), and an α-olefin, as the only two monomer types.

The term "in adhering contact" and like terms mean that one facial surface of one layer and one facial surface of another layer are in touching and binding contact to one another such that one layer cannot be removed from the other layer without damage to the interlayer surfaces (i.e., the in-contact facial surfaces) of both layers.

In one aspect, the present invention provides a multilayer film that comprises an outer layer, wherein the outer layer means that one surface of the outer layer is an outermost surface of the film, the outer layer comprising:
a polyethylene having a density of 0.930 g/cm³ or greater; and
0.01 to 1 weight percent of an additive based on the total weight of the outer layer, the additive comprising:
   (i) a sorbitol acetal derivative comprising the structure of formula (I): 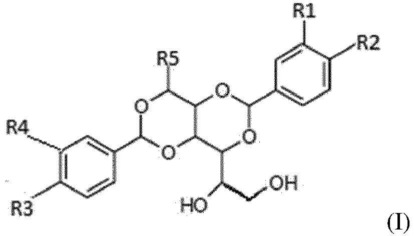 wherein R1-R5 in formula (I) comprise the same or different moieties chosen from hydrogen and a C₁-C₃ alkyl; or
   (ii) a bisamide comprising a structure of formulas (II), (III), or (IV): 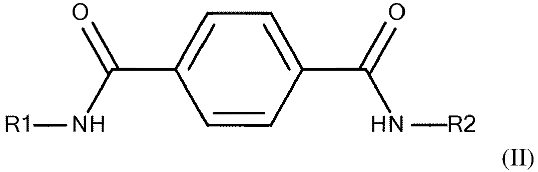 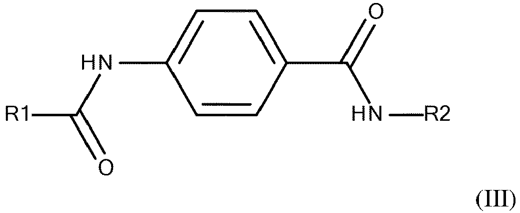 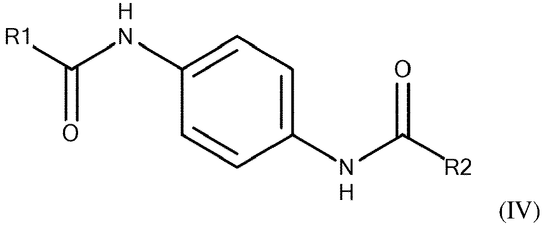 wherein R1 and R2 in formulas (II), (III), and (IV) comprise the same or different moieties chosen from: C₁-C₂₀ alkyl unsubstituted or substituted by one or more hydroxy; C₄-C₂₀ alkenyl unsubstituted or substituted by one or more hydroxy; C₂-C₂₀ alkyl interrupted by oxygen or sulfur; C₃-C₁₂ cycloalkyl unsubstituted or substituted by one or more C₁-C₂₀ alkyl; (C3-C₁₂ cycloalkyl)-C₁-C₁₀ alkyl unsubstituted or substituted by one or more C₁-C₂₀ alkyl; bis[C₃-C₁₂ cycloalkyl]-C₁-C₁₀ alkyl unsubstituted or substituted by one or more C₁-C₂₀ alkyl; a bicyclic or tricyclic hydrocarbon radical with 5 to 20 carbon atoms unsubstituted or substituted by one or more C₁-C₂₀ alkyl; phenyl unsubstituted or substituted by one or more radicals selected from C₁-C₂₀ alkyl, C₁-C₂₀ alkoxy, C₁-C₂₀ alkylamino, di(C₁-C₂₀ alkyl)amino, hydroxy and nitro; phenyl-C₁-C₂₀ alkyl unsubstituted or substituted by one or more radicals selected from C₁-C₂₀ alkyl, C₃-C₁₂ cycloalkyl, phenyl, C₁-C₂₀ alkoxy and hydroxy; phenylethenyl unsubstituted or substituted by one or more C₁-C₂₀ alkyl; biphenyl-(C₁-C₁₀ alkyl) unsubstituted or substituted by one or more C₁-C₂₀ alkyl; naphthyl unsubstituted or substituted by one or more C₁-C₂₀ alkyl; naphthyl-C₁-C₂₀ alkyl unsubstituted or substituted by one or more C₁-C₂₀ alkyl; naphthoxymethyl unsubstituted or substituted by one or more C₁-C₂ alkyl; biphenylenyl, flourenyl, anthryl; a 5-to-6-membered heterocylic radical unsubstituted or substituted by one or more C₁-C₂₀ alkyl; a C₁-C₂₀ hydrocarbon radical containing one or more halogen; or tri(C₁-C₁₀ alkyl)silyl(C₁-C₁₀ alkyl) dibenzylidene sorbitol;
   wherein the outer layer has a 50% seal strength temperature at least 10° C greater than an outer layer in a comparative film that differs only in the absence of the additive in the outer layer, when sealed to itself at a pressure of 5 bar with a dwell time of 0.5 seconds; and
   wherein the film has a gloss of at least 30 at 45° as measured based on ASTM D2457; wherein density and seal strength are measured in accordance with the description. In some embodiments, the outer layer has a 50% seal strength temperature at least 15° C greater than an outer layer in a comparative film that differs only in the absence of the additive in the outer layer, when sealed to itself at a pressure of 5 bar with a dwell time of 0.5 seconds. The outer layer, in some embodiments, has a 50% seal strength temperature at least 20° C greater than an outer layer in a comparative film that differs only in the absence of the additive in the outer layer, when sealed to itself at a pressure of 5 bar with a dwell time of 0.5 seconds.

In some embodiments where the additive comprises the sorbitol acetal derivative of formula (I), the outer layer comprises 0.1 to 0.5 weight percent of the sorbitol acetal derivative based on the total weight of the outer layer. In some embodiments where the additive comprises the sorbitol acetal derivative of formula (I), the outer layer comprises 0.15 to 0.3 weight percent of the sorbitol acetal derivative based on the total weight of the outer layer. In some embodiments where the additive comprises a bisamide of formula (II), (III), or (IV), the outer layer comprises 0.01 to 0.5 weight percent of the bisamide based on the total weight of the outer layer. In some embodiments, the outer layer comprises 0.03-0.35 weight percent of the bisamide based on the total weight of the outer layer. In some embodiments where the additive comprises a bisamide of formula (II), (III), or (IV), the outer layer comprises 0.05 to 0.15 weight percent of the bisamide based on the total weight of the outer layer.

In some embodiments, the polyethylene in the outer layer comprises linear low density polyethylene, medium density polyethylene, high density polyethylene, or a combination thereof. In some embodiments, the total amount of polyethylene having a density of 0.930 g/cm³ or greater in the outer layer is at least 50 weight percent of the outer layer based on the weight of the outer layer. The outer layer, in some embodiments, comprises at least 70 weight percent of polyethylene having a density of 0.930 g/cm³ or greater, based on the total weight of the outer layer. In some embodiments, the total amount of polyethylene having a density of 0.930 g/cm³ or greater in the outer layer is at least 90 weight percent of the outer layer based on the total weight of the outer layer.

In some embodiments, the outer layer comprises polypropylene in an amount of 5 weight percent or less based on the total weight of the outer layer.

The outer layer, in some embodiments, further comprises an antioxidant, a colorant, an antistatic agent, a slip agent, an antiblock, a UV stabilizing agent, an antifog agent, a processing aid, a mold-release agent, and combinations thereof

In some embodiments, a multilayer film of the present invention further comprises a sealant layer in adhering contact with the outer layer and the sealant layer is also an outer layer of the film.

In some embodiments, an outer surface of the film is printed. In some such embodiments, a multilayer film of the present invention further comprises a sealant layer and the sealant layer is a second outer surface of the film opposite the printed surface.

Multilayer films of the present invention, have a gloss of at least 30 at 45° as measured based on ASTM D2457. In some embodiments, multilayer films of the present invention have a haze of 30% or less as measured based on ASTM D1003.

A multilayer film of the present invention can comprise a combination of two or more embodiments as described herein.

Embodiments of the present invention also relate to packages comprising any of the multilayer films of the present invention disclosed herein. Embodiments of the present invention also relate to stand-up pouches comprising any of the multilayer films of the present invention disclosed herein. Embodiments of the present invention also relate to shrink films comprising any of the multilayer films disclosed herein. Embodiments of the present invention also relate to stretch hood films comprising any of the multilayer films disclosed herein.

### Outer Layer

As set forth herein, a multilayer film of the present invention comprises an outer layer that comprises a polyethylene having a density of 0.930 g/cm³ or greater and 0.05 to 1 weight percent of an additive (described further below), based on the total weight of the outer layer. As used herein, the "outer layer" means that one surface of the outer layer is an outermost surface of the film. The multilayer film will of course have two outermost surfaces prior to formation into a package or other structure. When formed into a package or otherwise used, the outer layer may be on the exterior of package (or facing outwardly) in some uses, and in other uses, may be on the interior of the package (or facing inwardly).

One or more polyethylenes in the outer layer have a density of 0.930 g/cm³ or greater. All individual values and subranges greater than or equal to 0.930 g/cm³ are included herein and disclosed herein; for example, the density of the polyethylenes can be from a lower limit of 0.930, 0.932, 0.935, 0.936, 0.940, 0.945, 0.947, 0.950, 0.955, or 0.960 g/cm³ In some aspects of the invention, the polyethylenes in the outer layer have a density up to 0.970 g/cm³. All individual values and subranges between 0.930 and 0.970 cm³ are included herein and disclosed herein.

The melt index of the polyethylene having a density of 0.930 g/cm³ or greater in the outer layer can depend on a number of factors including whether the film is a blown film or a cast film. In embodiments where the film is a blown film, the polyethylene in the outer layer could have a melt index (I₂) up to 3.0 g/10 minutes.

In other embodiments, the film can be a cast film. In such embodiments, the polyethylene having a density of 0.930 g/cm³ or less in the outer layer has an I₂ greater than or equal to 1.0 g/10 minutes.

The outer layer comprises at least 50 percent by weight of polyethylene having a density of 0.930 g/cm³ or greater in some embodiments. The outer layer comprises up to 99.95 percent by weight of polyethylene having a density of 0.930 g/cm³ or greater. If a polyethylene in the outer layer is a blend, then the density of the polyethylene blend for determination of weight percentage in the outer layer is the overall density of the polyethylene blend. All individual values and subranges from 50 to 99.95 percent by weight (wt%) are included herein and disclosed herein; for example the amount of the polyethylene can be from a lower limit of 50, 60, 70, 80, or 90 wt% to an upper limit of 70, 80, 90, 99, 99.5, 99.65, 99.7, 99.85, 99.9 wt%. For example, the amount of the polyethylene having a density of 0.930 g/cm³ or greater can be from 60 to 99.95 wt%, or in the alternative, from 70 to 99.95 wt%, or in the alternative, from 80 to 99.95 wt%, or in the alternative from 90 to 99.95 wt%, or in the alternative, from 70 to 99.9 wt%, or in the alternative, from 80 to 99.9 wt%, or in the alternative from 90 to 99.9 wt%.

Examples of polyethylenes having a density of 0.930 g/cm³ or greater that can be used in the polyethylene composition in the outer layer include linear low density polyethylenes, medium density polyethylenes, high density polyethylenes, and enhanced polyethylenes. Such polyethylenes include those commercially available from The Dow Chemical Company under the names DOWLEX^{™} and ELITE^{™} including, for example, DOWLEX^{™} 2740G linear low density polyethylene, and ELITE^{™} 5960G high density enhanced polyethylene.

In some embodiments, the outer layer can comprise a second polyethylene. In general, the second polyethylene in the outer layer can comprise any polyethylene known to those of skill in the art to be suitable for use as an outer layer in a multilayer film based on the teachings herein and may depend on desired heat seal properties, desired optical properties, and other factors. For example, the second polyethylene that can be used in the outer layer, in some embodiments, can be ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), enhanced polyethylenes, and others.

In some embodiments, the outer layer can comprise polypropylene. The polypropylene can comprise propylene/a-olefin copolymer, propylene homopolymer, or blends thereof. The propylene/a-olefin copolymer, in various embodiments, can be random copolymer polypropylene (rcPP), impact copolymer polypropylene (hPP + at least one elastomeric impact modifier) (ICPP), high impact polypropylene (HIPP), high melt strength polypropylene (HMS-PP), isotactic polypropylene (iPP), syndiotactic polypropylene (sPP), propylene based copolymers with ethylene, and combinations thereof. In embodiments, where polypropylene is incorporated in the outer layer, the total amount of polypropylene is no more than 5 weight percent based on the total weight of the outer layer. In some embodiments where the outer layer comprises polypropylene, the total amount of polypropylene is no more than 3 weight percent based on the total weight of the outer layer, or no more than 2 weight percent based on the total weight of the outer layer in some embodiments, or no more than 1 weight percent based on the total weight of the outer layer. The inclusion of too much polypropylene can lead to incompatibility such that in some embodiments, the outer layer does not contain any polypropylene, or is substantially free of polypropylene (e.g., comprises no more than 0.1 weight percent polypropylene).

The outer layer of multilayer films of the present invention also comprise 0.01 to 1 weight percent of an additive that is a sorbitol acetal derivative or a bisamide. As set forth herein, the inclusion of relatively small amounts of such additives have surprisingly been found to improve the heat resistance of the outer layer of a multilayer film during sealing, in addition to improving optical properties.

### (1) Sorbitol Acetal Derivatives

With regard to sorbitol acetal derivatives that can be used as an additive in some embodiments, the sorbitol acetal derivative is shown in Formula (I): 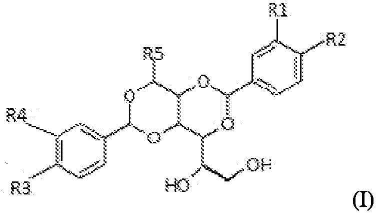 wherein R1-R5 comprise the same or different moieties chosen from hydrogen and a C₁-C₃ alkyl.

In some embodiments, R1-R5 are hydrogen, such that the sorbitol acetal derivative is 2,4-dibenzylidene sorbitol ("DBS"). In some embodiments, R1, R4, and R5 are hydrogen, and R2 and R3 are methyl groups, such that the sorbitol acetal derivative is 1,3:2,4-di-p-methyldibenzylidene-D-sorbitol ("MDBS"). In some embodiments, R1-R4 are methyl groups and R5 is hydrogen, such that the sorbitol acetal derivative is 1,3:2,4-Bis (3,4-dimethylobenzylideno) sorbitol ("DMDBS"). In some embodiments, R2, R3, and R5 are propyl groups (-CH₂-CH₂-CH₃), and R1 and R4 are hydrogen, such that the sorbitol acetal derivative is 1,2,3-trideoxy-4,6:5,7-bis-O-(4-propylphenyl methylene) nonitol ("TBPMN"). Additional information regarding such sorbitol acetal derivatives can be found, for example, in PCT Publication No. WO2007/127067 and U.S. Patent No. 5,049,605.

In some embodiments wherein the additive comprises the sorbitol acetal derivative of formula (1), the outer layer of the multilayer film comprises 0.01 to 1 weight percent of the sorbitol acetal derivative based on the total weight of the outer layer. The outer layer, in some embodiments, comprises 0.1 to 0.5 weight percent of the sorbitol acetal derivative based on the total weight of the outer layer. In some embodiments, the outer layer comprises 0.15 to 0.3 weight percent of the sorbitol acetal derivative based on the total weight of the outer layer.

Examples of sorbitol acetal derivatives that can be used in an outer layer of a multilayer film of the present invention include sorbitol acetal derivatives commercially available from Milliken Chemical under the name Millad including, for example, Millad 3988 (DMDBS) and Millad NX8000 and from Roquette including, for example, Disorbene 3.

### (2) Bisamides

With regard to the bisamides that can be used as an additive in some embodiments, the bisamide may comprise a structure of formulas (II), (III), or (IV): 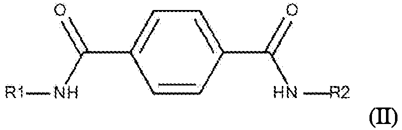 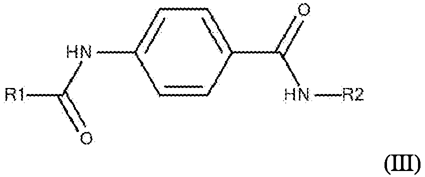 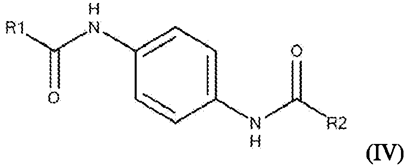 wherein R1 and R2 in formulas (II), (III), and (IV) comprise the same or different moieties chosen from: C₁-C₂₀ alkyl unsubstituted or substituted by one or more hydroxy; C₄-C₂₀ alkenyl unsubstituted or substituted by one or more hydroxy; C₂-C₂₀ alkyl interrupted by oxygen or sulfur; C₃-C₁₂ cycloalkyl unsubstituted or substituted by one or more C₁-C₂₀ alkyl; (C3-C₁₂ cycloalkyl)-C₁-C₁₀ alkyl unsubstituted or substituted by one or more C₁-C₂₀ alkyl; bis[C₃-C₁₂ cycloalkyl]-C₁-C₁₀ alkyl unsubstituted or substituted by one or more C₁-C₂₀ alkyl; a bicyclic or tricyclic hydrocarbon radical with 5 to 20 carbon atoms unsubstituted or substituted by one or more C₁-C₂₀ alkyl; phenyl unsubstituted or substituted by one or more radicals selected from C₁-C₂₀ alkyl, C₁-C₂₀ alkoxy, C₁-C₂₀ alkylamino, di(C₁-C₂₀ alkyl)amino, hydroxy and nitro; phenyl-C₁-C₂₀ alkyl unsubstituted or substituted by one or more radicals selected from C₁-C₂₀ alkyl, C₃-C₁₂ cycloalkyl, phenyl, C₁-C₂₀ alkoxy and hydroxy; phenylethenyl unsubstituted or substituted by one or more C₁-C₂₀ alkyl; biphenyl-(C₁-C₁₀ alkyl) unsubstituted or substituted by one or more C₁-C₂₀ alkyl; naphthyl unsubstituted or substituted by one or more C₁-C₂₀ alkyl; naphthyl-C₁-C₂₀ alkyl unsubstituted or substituted by one or more C₁-C₂₀ alkyl; naphthoxymethyl unsubstituted or substituted by one or more C₁-C₂ alkyl; biphenylenyl, flourenyl, anthryl; a 5-to-6-membered heterocylic radical unsubstituted or substituted by one or more C₁-C₂₀ alkyl; a C₁-C₂₀ hydrocarbon radical containing one or more halogen; or tri(C₁-C₁₀ alkyl)silyl(C₁-C₁₀ alkyl).

In one embodiment, the R1, R2, or both of the nucleating agents in formulas (II), (III), and (IV) are: 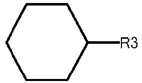 wherein R3 is a direct bond, or a C₁-C₆ alkyl, or a C₁-C₃ alkyl.

In another embodiment, the R1, R2 or both of the nucleating agents in formulas (II), (III), and (IV) are: 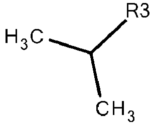 wherein R3 is a direct bond, or a C₁-C₆ alkyl, or a C₁-C₃ alkyl.

In a further embodiment, the R1, R2 or both of the nucleating agents in formulas (II), (III), and (IV) are: 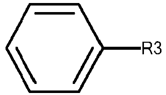 wherein R3 is a direct bond, or a C₁-C₆ alkyl, or a C₁-C₃ alkyl.

In yet another embodiment, the R1, R2, or both of the nucleating agents in formulas (II), (III), and (IV) are: 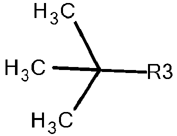 wherein R3 is a direct bond, or a C₁-C₆ alkyl, or a C₁-C₃ alkyl.

In yet another embodiment, the R1, R2, or both of the nucleating agents in formulas (II), (III), and (IV) are a C₁-C₆ alkyl, or a C₁-C₃ alkyl.

In some embodiments wherein the additive comprises any of the foregoing bisamides, the outer layer of the multilayer film comprises 0.01 to 1 weight percent of the bisamide based on the total weight of the outer layer. The outer layer, in some embodiments, comprises 0.01 to 0.5 weight percent of the bisamide based on the total weight of the outer layer. In some embodiments, the outer layer comprises 0.03 to 0.35 weight percent of the bisamide based on the total weight of the outer layer. The outer layer, in some embodiments, comprises 0.05 to 0.15 weight percent of the bisamide based on the total weight of the outer layer.

### Other Layers

In addition to the outer layer, multilayer films can include a variety of other layers. For example, multilayer films of the present invention include a second layer having a top facial surface and a bottom facial surface, wherein the top facial surface of the second layer is in adhering contact with a bottom facial surface of the outer layer.

In general, the second layer can be formed from any polymer or polymer blend known to those of skill in the art.

The second layer, in some embodiments, comprises polyethylene. Polyethylene can be particularly desirable in some embodiments as it can permit the coextrusion of the second layer with the outer layer. In such embodiments, the second layer can comprise any polyethylene known to those of skill in the art to be suitable for use as a layer in a multilayer film based on the teachings herein. For example, the polyethylene that can be used in the second layer, in some embodiments, can be ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), enhanced polyethylenes, and others.

In some embodiments, the outer layer can act as a sealant layer and be used to seal the multilayer film to another structure (e.g., another film, a sheet, a tray, etc.), or to itself. In such embodiments, a top facial surface of the outer layer is an outer surface of the multilayer film.

In some embodiments, a multilayer film can further comprise a sealant layer. The sealant layer may or may not be in adhering contact with a bottom facial surface of the outer layer (i.e., there may be other layers between the sealant layer and the outer layer). In embodiments comprising a sealant layer, the sealant layer provides a second outer surface of the film (in addition to the top facial surface of the outer layer). In embodiments comprising a sealant layer, any sealant layer known to those of skill in the art may be used.

Some embodiments of multilayer films of the present invention can include layers beyond those described above. In such embodiments comprising three or more layers, the top facial surface of the outer layer is a top surface of the multilayer film. In other words, any additional layers would be in adhering contact with a bottom facial surface of the outer layer, or another intermediate layer.

For example, a multilayer film can further comprise other layers typically included in multilayer films depending on the application including, for example, barrier layers, tie layers, polyethylene layers, polypropylene layers, etc.

Depending on the composition of the additional layer and the multilayer film, in some embodiments, the additional layer can be coextruded with other layers in the film, while in other embodiments, the additional layer can be laminated to a bottom facial surface of an adjacent layer.

### Other Additives

It should be understood that any of the foregoing layers, including the outer layer and any other layers, can further comprise one or more other additives as known to those of skill in the art such as, for example, antioxidants, colorants, antistatic agents, slip agents, antiblocks, UV stabilizing agents, antifog agents, processing aids, mold-release agents, and combinations thereof.

### Film Properties

Multilayer films comprising the combinations of layers disclosed herein can have a variety of thicknesses depending, for example, on the number of layers, the intended use of the film, and other factors. Multilayer films of the present invention, in some embodiments, have a thickness of 20 to 200 microns (preferably 30-150 microns).

Various embodiments of coated films of the present invention can have one or more desirable properties including, for example, a broad thermal resistance range, an improved 50% seal strength temperature, desirable optical properties (e.g., gloss, haze, clarity) and/or other properties, and combinations thereof.

In some embodiments, an outer layer of a multilayer film of the present invention has a 50% seal strength temperature at least 10° C greater than an outer layer in a comparative film that differs only in the absence of the additive in the outer layer, when sealed to itself at a pressure of 5 bar with a dwell time of 0.5 seconds. An outer layer of a multilayer film in some embodiments of the present invention has a 50% seal strength temperature at least 15° C greater than an outer layer in a comparative film that differs only in the absence of the additive in the outer layer, when sealed to itself at a pressure of 5 bar with a dwell time of 0.5 seconds. In some embodiments, an outer layer of a multilayer film of the present invention has a 50% seal strength temperature at least 20° C greater than an outer layer in a comparative film that differs only in the absence of the additive in the outer layer, when sealed to itself at a pressure of 5 bar with a dwell time of 0.5 seconds.

In some embodiments, multilayer films of the present invention exhibit desirable gloss. The claimed multilayer films exhibit a gloss of at least 30 units at 45° when measured according to ASTM D2457. Multilayer films, in some embodiments, exhibit a gloss of up to 95 units at 45° when measured according to ASTM D2457. In some embodiments, multilayer films exhibit a gloss of 30 to 95 units at 45° when measured according to ASTM D2457.

In some embodiments, multilayer films of the present invention exhibit desirable haze. In some embodiments, multilayer films exhibit a haze of 30% or less when measured according to ASTM 1003 at a thickness of 50 microns. Multilayer films, in some embodiments, exhibit a haze of 5 to 30% when measured according to ASTM D1003 at a film thickness of 50 microns. All individual values and subranges from 5 to 30% are included herein and disclosed herein.

Some embodiments of multilayer films can exhibit a combination of the seal strength, 50% seal strength temperature, gloss, and haze properties recited above.

### Methods of Preparing Multilayer Films

Multilayer films can be formed using techniques known to those of skill in the art based on the teachings herein. For example, for those layers that can be coextruded, such layers can be coextruded as blown films or cast films using techniques known to those of skill in the art based on the teachings herein. In particular, based on the compositions of the different film layers disclosed herein, blown film manufacturing lines and cast film manufacturing lines can be configured to coextrude multilayer films of the present invention in a single extrusion step using techniques known to those of skill in the art based on the teachings herein.

In some embodiments, multilayer films may comprise a plurality of layers that are coextruded and then laminated to one or more additional layers. In such embodiments, a facial surface of the coextruded film can be laminated to a facial surface of another film layer using techniques known to those of skill in the art based on the teachings herein. For example, in one embodiment, a multilayer film of the present invention can be reverse-printed on the outer surface opposite the outer surface provided by the outer layer, and then laminated to another film (e.g., another polyethylene film). In such an embodiment, the outer layer of the multilayer film of the present invention can provide improved heat resistance and optical properties.

In some embodiments, an outer surface of the multilayer film can be printed using techniques known to those of skill in the art based on the teachings herein.

### Packages

Multilayer films of the present invention can be used to form a package. Such packages can be formed from any of the multilayer films described herein. Examples of such packages can include flexible packages, pouches, stand-up pouches, and pre-made packages or pouches. In some embodiments, multilayer films of the present invention can be used for food packages. Examples of food that can be included in such packages include meats, cheeses, cereal, nuts, juices, sauces, and others. Such packages can be formed using techniques known to those of skill in the art based on the teachings herein and based on the particular use for the package (e.g., type of food, amount of food, etc.).

Packages utilizing multilayer films of the present invention can advantageously be formed with heat seal packaging equipment utilizing continuously heated seal bars, in some embodiments. The thermal resistance properties of the outer layer of the multilayer films help protect the film structure during formation of the package with the continuously heated seal bars. Examples of such packaging equipment utilizing continuously heated seal bars include horizontal form-fill-seal machines and vertical form-fill-seal machines. Examples of packages that can be formed from such equipment include stand-up pouches, 4-corner packages (pillow pouches), fin seal packages and others.

### Other Applications

In addition to packages, in some embodiments, multilayer films of the present invention can be used in other applications. Some embodiments of the present invention relate to shrink films formed from any of the multilayer films described herein. Some embodiments of the present invention relate to stretch hood films formed from any of the multilayer films described herein. The thermal resistance of the outer layer of multilayer films according to some embodiments of the present invention can be advantageous in such applications. For example, the outer layer can provide resistance to fusion between the multilayer film and an adjacent film. Thus, when used as a stretch hood film or a shrink film, the outer layer of the multilayer film can face either inwardly (be an interior surface in proximity to the wrapped item(s)) or outwardly (be an exterior surface to the wrapped item(s)), depending, for example, on where the resistance to fusion with an adjacent film is desired. Shrink films and stretch hood films can be formed from multilayer films of the present invention using techniques known to those of skill in the art based on the teachings herein.

### TEST METHODS

Unless otherwise indicated herein, the following analytical methods are used in the describing aspects of the present invention:

### Density

Samples for density measurement are prepared according to ASTM D 1928. Polymer samples are pressed at 190° C and 30,000 psi (207 MPa) for three minutes, and then at 21° C and 207 MPa for one minute. Measurements are made within one hour of sample pressing using ASTM D792, Method B.

### Melt Index

Melt indices I₂ (or I2) and I₁₀ (or I10) are measured in accordance with ASTM D-1238 at 190° C and at 2.16 kg and 10 kg load, respectively. Their values are reported in g/10 min. "Melt flow rate" is used for polypropylene based resins and determined according to ASTM D1238 (230° C at 2.16 kg).

### Optical Properties

*Gloss* is determined according to ASTM D2457.

*Haze* is determined according to ASTM D1003. Internal haze is also determined according to ASTM D1003 but the surface of the film is coated with mineral oil so that the potential effect of surface roughness is removed.

*Clarity* is determined according to ASTM D1746.

### Heat Seal Strength

Heat seal strength, or seal strength is measured using ASTM F2029-00 as follows. The film sample, which can be any thickness, is sealed to itself at different temperatures at a pressure of 5 bar and a 0.5 second dwell time (films of thicknesses greater than 100 micron are sealed with a 1 second dwell time). The samples are conditioned for 40 hours and then cut into 15mm strips which are then pulled on an Instron tensile testing device at a rate of 100mm/min. 5 replicate test samples are measured, and the average is recorded.

### 50% Seal Strength Temperature

From the above heat seal strength measurements described above, the 50% seal strength temperature is determined as the temperature required to generate a seal having 50% of the maximum heat seal strength achievable by the film. The maximum heat seal strength is the plateau seal strength (the strength at which a seal strength vs. temperature curve for the film plateaus).

Some embodiments of the invention will now be described in detail in the following Examples.

### Examples

### Examples 1-10 provide exemplary bisamide structures that can be used as additives in embodiments of the present invention and methods of making such structures. Example 1 - Method of making N,N'-Dicyclohexyl-1,4-benzenedicarboxamide

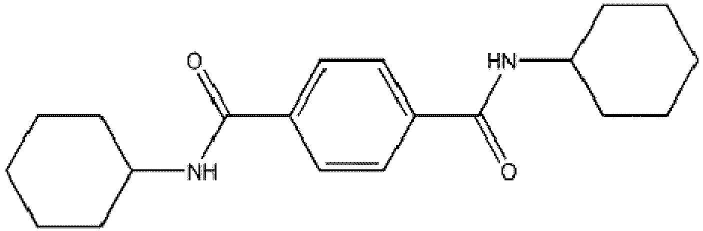

N-methylpyrrolidone (NMP) was stirred for 1 day over CaH₂ and finally distilled off. Triethylamine was treated in a similar manner. Cyclohexylamine was stirred over KOH and distilled off. 5.5 mL of cyclohexylamine, 0.1 g of anhydrous LiCl, and 25 mL of triethylamine were dissolved in 100 mL of dry NMP under inert atmosphere. 4.06 g of terephthaloyl chloride were added to the solution and subsequently stirred for 2 h at 75 °C. Then the solution was cooled to room temperature and poured into ice-water. The precipitate was filtered off, washed several times with water. The crude product was recrystallized from DMF, yielding 4.03 g of N,N'-Dicyclohexyl-1,4-benzenedicarboxamide as white powder.

### Example 2 - N,N'-Bis(cyclohexylmethyl)-1,4-benzenedicarboxamide

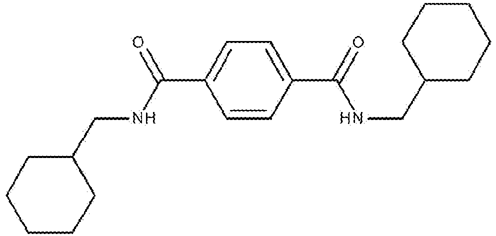

Triethylamine was stirred for 1 day over CaH₂ and finally distilled off. Tetrahydrofuran (THF) was refluxed for three days over CaH₂, distilled, refluxed for another three days over potassium and finally distilled again. 3.75 mL of cyclohexyanemethylamine, 0.1 g of anhydrous LiCl, and 15 mL of triethylamine were dissolved in 150 mL of dry THF under inert atmosphere and cooled to 0°C. 2.66 g of terephthaloyl chloride were added to the solution and subsequently refluxed for 12 h. Then the solution was cooled to room temperature and poured into ice-water. The precipitate was filtered off, washed several times with water. The crude product was recrystallized from DMSO, yielding 4.25 g of N,N'-Bis(cyclohexylmethyl)-1,4-benzenedicarboxamide as white needles.

### Example 3 - N,N'-Bis(cyclohexylethyl)-1,4-benzenedicarboxamide

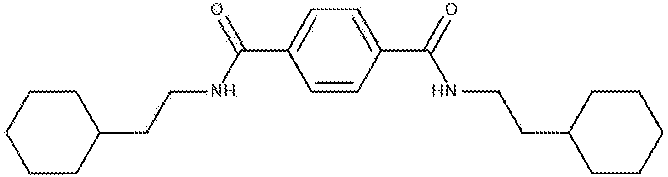

Triethylamine was stirred for 1 day over CaH₂ and finally distilled off. THF was refluxed for three days over CaH₂, distilled, refluxed for another three days over potassium and finally distilled again. 3.25 mL of cyclohexyaneethylamine, 0.1 g of anhydrous LiCl, and 15 mL of triethylamine were dissolved in 150 mL of dry THF under inert atmosphere and cooled to 0°C. 2.03 g of terephthaloyl chloride were added to the solution and subsequently refluxed for 12 h. Then the solution was cooled to room temperature and poured into ice-water. The precipitate was filtered off, washed several times with water. The crude product was recrystallized from DMSO, yielding 3.79 g of N,N'-Bis(cyclohexylethyl)-1,4-benzenedicarboxamide as white needles.

### Example 4 - N,N'-Bis(isopropyl)-1,4-benzenedicarboxamide

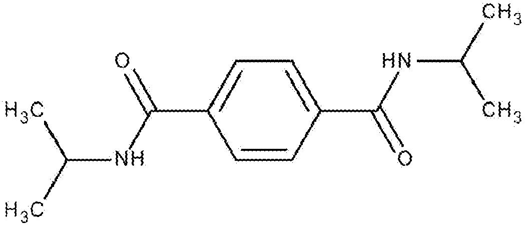

Triethylamine was stirred for 1 day over CaH₂ and finally distilled off. THF was refluxed for three days over CaH₂, distilled, refluxed for another three days over potassium and finally distilled again. 2.77 mL of isopropylamine, 0.1 g of anhydrous LiCl, and 15 mL of triethylamine were dissolved in 100 mL of dry THF under inert atmosphere and cooled to 0°C. 3.00 g of terephthaloyl chloride were added to the solution and subsequently refluxed for 12 h. Then the solution was cooled to room temperature and poured into ice-water. The precipitate was filtered off, washed several times with water. The crude product was recrystallized from methanol, yielding 2.40 g of ,N'-Bis(isopropyl)-1,4-benzenedicarboxamide as white crystals.

### Example 5 - N,N'-Bis(2-methylpropyl)-1,4-benzenedicarboxamide

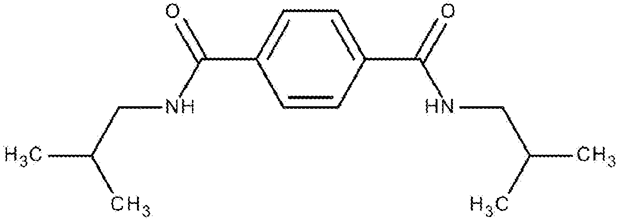

Triethylamine was stirred for 1 day over CaH₂ and finally distilled off. THF was refluxed for three days over CaH₂, distilled, refluxed for another three days over potassium and finally distilled again. 3.26 mL of isobutylamine, 0.1 g of anhydrous LiCl, and 15 mL of triethylamine were dissolved in 100 mL of dry THF under inert atmosphere and cooled to 0°C. 3.00 g of terephthaloyl chloride were added to the solution and subsequently refluxed for 12 h. Then the solvent was evaporated, the residue was dissolved in MeOH, and poured into ice-water. The precipitate was filtered off, washed several times with water, yielding 2.09 g of N,N'-Bis(2-methylpropyl)-1,4-benzenedicarboxamide as white powder.

### Example 6 - N,N'-Bis(2-methylbutyl)-1,4-benzenedicarboxamide

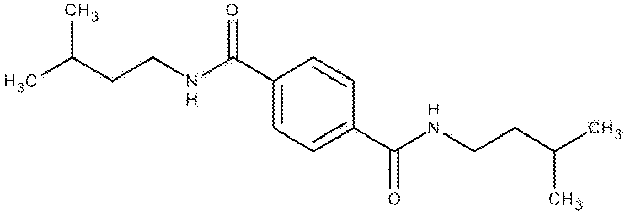

Triethylamine was stirred for 1 day over CaH₂ and finally distilled off. THF was refluxed for three days over CaH₂, distilled, refluxed for another three days over potassium and finally distilled again. 3.35 mL of 3-methylbutylamine, 0.1 g of anhydrous LiCl, and 15 mL of triethylamine were dissolved in 100 mL of dry THF under inert atmosphere and cooled to 0°C. 2.66 g of terephthaloyl chloride were added to the solution and subsequently refluxed for 12 h. Then the solution was cooled to room temperature and poured into ice-water. The precipitate was filtered off, washed several times with water. The crude product was recrystallized from DMSO, yielding 2.98 g of N,N'-Bis(2-methylbutyl)-1,4-benzenedicarboxamide as white powder.

### Example 7 - N,N'-Bis(tert-butyl)-1,4-benzenedicarboxamide

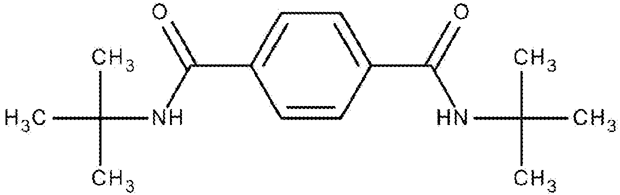

NMP was stirred for 1 day over CaH₂ and finally distilled off. Triethylamine was treated in a similar manner. 5.04 mL of tert-butylamine, 0.1 g of anhydrous LiCl, and 25 mL of triethylamine were dissolved in 100 mL of dry NMP under inert atmosphere. 4.06 g of terephthaloyl chloride were added to the solution and subsequently stirred for 2 h at 75°C. Then the solution was cooled to room temperature and poured into ice-water. The precipitate was filtered off, washed several times with water. The crude product was recrystallized from DMF, yielding 3.68 g of N,N'-Bis(tert-butyl)-1,4-benzenedicarboxamide as whitish needles.

### Example 8 - N,N'-Bis(2,2-dimethylpropyl)-1,4-benzenedicarboxamide

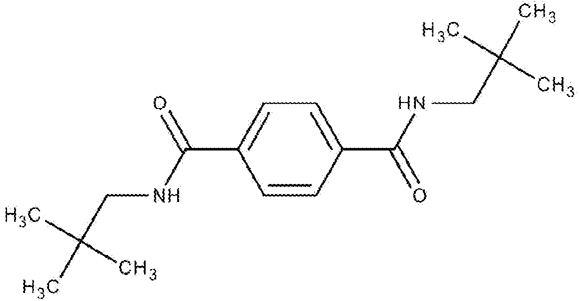

Triethylamine was stirred for 1 day over CaH₂ and finally distilled off. THF was refluxed for three days over CaH₂, distilled, refluxed for another three days over potassium and finally distilled again. 3.17 mL of amylamine, 0.1 g of anhydrous LiCl, and 12 mL of triethylamine were dissolved in 70 mL of dry THF under inert atmosphere and cooled to 0°C. 2.50 g of terephthaloyl chloride were added to the solution and subsequently refluxed for 12 h. Then the solvent was evaporated, the residue was dissolved in MeOH, and poured into ice-water. The precipitate was filtered off, washed several times with water and hexane and dried in vacuum, yielding 3.23 g of N,N'-Bis(2,2-dimethylpropyl)-1,4-benzenedicarboxamide as white powder.

### Example 9 - N,N'-Bis(3,3-dimethylbutyl)-1,4-benzenedicarboxamide

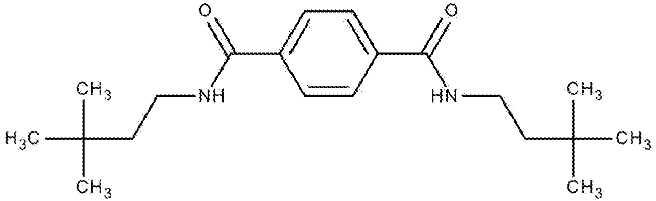

Triethylamine was stirred for 1 day over CaH₂ and finally distilled off. THF was refluxed for three days over CaH₂, distilled, refluxed for another three days over potassium and finally distilled again. 1.33 mL of 3,3-dimethylbutylamine, 0.1 g of anhydrous LiCl, and 5 mL of triethylamine were dissolved in 50 mL of dry THF under inert atmosphere and cooled to 0°C. 0.91 g of terephthaloyl chloride were added to the solution and subsequently refluxed for 12 h. Then the solvent was evaporated, the residue was dissolved in MeOH, and poured into water. The precipitate was filtered off, washed several times with water and dried in vacuum. Recrystallization from methanol yields 1.04 g of N,N'-Bis(3,3-dimethylbutyl)-1,4-benzenedicarboxamide as white powder.

### Example 10 - N,N'-Dipropyl-1,4-benzenedicarboxamide

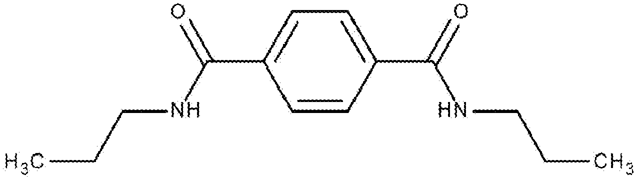

Triethylamine was stirred for 1 day over CaH₂ and finally distilled off. THF was refluxed for three days over CaH₂, distilled, refluxed for another three days over potassium and finally distilled again. 2.67 mL of propylamine, 0.1 g of anhydrous LiCl, and 15 mL of triethylamine were dissolved in 100 mL of dry THF under inert atmosphere and cooled to 0°C. 3.00 g of terephthaloyl chloride were added to the solution and subsequently refluxed for 12 h. Then the solution was cooled to room temperature and poured into water. The precipitate was filtered off, washed several times with water. The crude product was recrystallized from methanol yielding 1.5 g of N,N'-Dipropyl-1,4-benzenedicarboxamide as yellowish needles.

### Example 11

A number of samples of high density enhanced polyethylene monofilms having varying levels of sorbitol acetal derivative additives are prepared to have the compositions shown in Table 1:

**Table 1**

| | Polyethylene | Additive | Additive Amount (ppm) |
|---|---|---|---|
| Comparative Film A | ELITE^{™} 5960G | - | 0 |
| Inventive Film 1 | ELITE^{™} 5960G | Millad 3988i | 2000 |
| Inventive Film 2 | ELITE^{™} 5960G | Millad NX 8000 | 2000 |
| Inventive Film 3 | ELITE^{™} 5960G | Millad NX 8000 | 3000 |
| Inventive Film 4 | ELITE^{™} 5960G | Millad NX 8000 | 4000 |

ELITE^{™} 5960G is a high density enhanced polyethylene having a density of 0.962 g/cm³ and a melt index (I₂) of 0.85 g/10 minutes, commercially available from The Dow Chemical Company. Millad 3988i is a DMDBS commercially available from Milliken Chemical. Millad NX 8000 is a TBPMN commercially available from Milliken Chemical. The Inventive Films represent compositions that can be used as outer layers in multilayer films in accordance with some embodiments of the present invention.

Each of the films is fabricated on a Dr Collin monolayer, blown film extrusion line with a die diameter of 60 mm and a die gap of 1.2 mm. The extruder used contained a 30 mm diameter, general purpose screw with length/diameter ratio of 25:1. The four heating zones of the extruder are set at 190, 210, 225 and 230° C respectively, achieving a final melt temperature of 240° C. Adapter temperature and die temperature settings are 240° C. An output of 5kg/h is achieved. The films are allowed to age at least 48 hours prior to further testing. Each monofilm has a nominal film thickness of 50 microns.

The haze, internal haze, gloss, and clarity are measured using the methods identified above and the results are shown in Table 2.

**Table 2**

| | Haze (%) | Internal Haze (%) | 45° Gloss | Clarity |
|---|---|---|---|---|
| Comparative Film A | 40.5 | 20 | 22.5 | 88.2 |
| Inventive Film 1 | 23.4 | 13.1 | 47.8 | 86.5 |
| Inventive Film 2 | 32.9 | 18.6 | 29.6 | 90.3 |
| Inventive Film 3 | 21 | 12.9 | 49.1 | 92.2 |
| Inventive Film 4 | 18 | | 61 | |

The heat seal strengths of the films are measured using the method identified above and the results are shown in Table 3. The units are N/15 mm.

**Table 3**

| | Comparative Film A | Inventive Film 1 | Inventive Film 2 | Inventive Film 3 |
|---|---|---|---|---|
| 120° C | 0.031 | 0.007 | 0.02 | 0.014 |
| 130° C | 3.758 | 1.115 | 0.432 | 1.308 |
| 140° C | 17.678 | 5.46 | 2.392 | 5.505 |
| 150° C | 17.57 | 6.427 | 2.945 | 9.117 |
| 160° C | 18.085 | 10.23 | 14.601 | 16.229 |
| 170° C | 18.404 | 15.525 | 17.396 | 17.799 |
| 180° C | 18.462 | 17.642 | 18.129 | 18.2 |
| 190° C | 18.94 | 17.36 | 17.898 | 18.396 |
| 200° C | 17.745 | 17.36 | 18.355 | 18.019 |

From the heat seal strength data in Table 3, Comparative Film A has a 50% seal strength temperature of ~135° C while the Inventive Films each have 50% seal strength temperature of >150° C. In addition, the optical properties of the Inventive Films are clearly superior to those of Comparative Film A.

### Example 12

In this Example, a monofilm formed from a medium density polyethylene and a sorbitol acetal derivative additive is compared to a monofilm without the additive. The compositions of the monofilms are shown in Table 4:

**Table 4**

| | Polyethylene | Additive | Additive Amount (ppm) |
|---|---|---|---|
| Comparative Film B | DOWLEX^{™} 2740G | - | 0 |
| Inventive Film 5 | DOWLEX^{™} 2740G | Millad NX 8000 | 3000 |

DOWLEX^{™} 2740G is a medium density polyethylene having a density of 0.940 g/cm³ and a melt index (I₂) of 1.0 g/10 minutes, commercially available from The Dow Chemical Company. Inventive Film 5 represents a polyethylene composition that can be used as an outer layer in a multilayer film in accordance with some embodiments of the present invention.

Each of the films in this Example are fabricated using the same equipment and under the same general conditions as the films in Example 11. There are minor differences in extruder set temperatures, but the final melt temperature and output are the same. Each monofilm has a nominal film thickness of 50 microns.

The haze, internal haze, gloss, and clarity are measured using the methods identified above and the results are shown in Table 5.

**Table 5**

| | Haze (%) | Internal Haze (%) | 45° Gloss | Clarity |
|---|---|---|---|---|
| Comparative Film B | 15.5 | 6.2 | 48 | 98.1 |
| Inventive Film 5 | 5.9 | 3 | 80.7 | 99 |

The heat seal strengths of the films are measured using the method identified above and the results are shown in Table 6. The units are N/15 mm.

**Table 6**

| | Comparative Film B | Inventive Film 5 |
|---|---|---|
| 115° C | 0.08 | 0.005 |
| 120° C | 0.23 | 0.042 |
| 130° C | 13.23 | 1.198 |
| 140° C | 13 | 1.694 |
| 150° C | 13.61 | 2.158 |
| 160° C | 13.44 | 5.238 |
| 170° C | 13.2 | 13.526 |
| 180° C | 12.75 | 13.941 |
| 190° C | 15.18 | 15.105 |
| 200° C | | 13.876 |

From the heat seal strength data in Table 8, Comparative Film B has a 50% seal strength temperature of ~125° C while Inventive Film 5 has a 50% seal strength temperature of >160° C. In addition, the optical properties of Inventive Film 5 are superior to those of Comparative Film B.

### Example 13

In this Example, multilayer films according to some embodiments of the present invention are prepared and evaluated. The films are three layer blown films having an A/B/C construction as follows in Table 7:

**Table 7**

| **Layer** | **Layer A (16 microns)** | **Layer B (48 microns)** | **Layer C (16 microns) (Sealant Layer)** |
|---|---|---|---|
| Comparative Film C | HDPE (90%) | HDPE (90%) | AFFINITY^{™} PF1146 (80%) |
| | LDPE (10%) | LDPE (10%) | LDPE (20%) |
| Inventive Film 6 | HDPE (w/Millad NX 8000) (90%) | HDPE (w/Millad NX 8000) (90%) | AFFINITY^{™} PF 1146 (80%) |
| | LDPE (10%) | LDPE (10%) | LDPE (20%) |

The percentages in Table 9 are weight percentages based on the total weight of the respective layer. The HDPE in each of the films is a high density polyethylene having a density of 0.950 g/cm³ and a melt index (I₂) of 1.5 g/10 minutes. The LDPE is DOW^{™} LDPE 312E low density polyethylene having a density of 0.923 g/cm³ and a melt index (I₂) of 0.75 g/10 minutes, commercially available from The Dow Chemical Company. The Inventive Film represents a multilayer film in accordance with one embodiment of the present invention.

Layer A of Comparative Film C is provided with a coating. The coating is a two-component coating to enhance heat resistance. The coating consists of 100 parts of an overprint varnish blended with 15 parts of a hardener. The coating weight is 1.5 g/m².

Prior to forming Inventive Film 6, the specified sorbitol acetal derivative additive is blended with the HDPE using a Buss Compounder to form a 25 kg masterbatch comprising 0.25 kg of the additive and 24.75 kg of the HDPE. This masterbatch is then blended with 100 kg of HDPE online using the Alpine blown film line to provide the specified amount of HDPE (w/Additive) in Layers A and B. In each of these layers, the sorbitol acetal derivative additive is present in the polyethylene composition comprising HDPE at 2000 ppm.

Comparative Film C and Inventive Film 6 are fabricated on an Alpine co-extrusion blown film line to provide the 3 layer films having a nominal thickness of 80 microns and a width of 348-350 mm.

The haze and gloss are measured using the methods identified above and the results are shown in Table 8.

**Table 8**

| | Haze (%) | 45° Gloss |
|---|---|---|
| Comparative Film C | 33 | 32 |
| Inventive Film 6 | 24 | 43 |

The heat seal strengths of the outer layers of the films in the machine direction are measured using the method identified above and the results are shown in Table 9. The units are N/15 mm.

**Table 9**

| | Comparative Film C | Inventive Film 6 |
|---|---|---|
| 120° C | | |
| 130° C | 2.68 | 3.29 |
| 140° C | 12.5 | 7.74 |
| 150° C | 14.7 | 14.4 |
| 160° C | 16.7 | 21.1 |
| 170° C | 18 | 20.9 |
| 180° C | 19.8 | 21.6 |
| 190° C | 20.2 | 20.2 |
| 200° C | | |

From the heat seal strength data in Table 9, Inventive Film 6 provides comparable heat resistance to Comparative Film C, which is significant as Comparative Film C has a protective lacquer coating (additional processing step). In addition, with its heat resistance properties, Inventive Film 6 is capable of conversion into a package without issue on vertical form-fill-seal packaging equipment.

### Example 14

In this Example, a monofilm formed from a linear low density polyethylene and a bisamide additive is compared to a monofilm without the additive. The compositions of the monofilms are shown in Table 10:

**Table 10**

| | Polyethylene | Additive | Additive Amount (ppm) |
|---|---|---|---|
| Comparative Film D | DOWLEX^{™} 2045G | - | 0 |
| Inventive Film 7 | DOWLEX^{™} 2045G | Bisamide | 500 |
| Inventive Film 8 | DOWLEX^{™} 2045G | Bisamide | 1500 |

DOWLEX^{™} 2045G is a linear low density polyethylene having a density of 0.920 g/cm³ and a melt index (I₂) of 1.0 g/10 minutes, commercially available from The Dow Chemical Company. The Bisamide is Inventive Films 7 and 8 is the bisamide of Example 2 above. Inventive Films 7 and 8 represent compositions that can be used as an outer layer in a multilayer film in accordance with some embodiments of the present invention.

Each of the above blends are fabricated into films on a monolayer blown film line. Additional process parameters are provided in Table 11 below:

**Table 11**

| **Process Parameter** | **Process Parameter Value** |
|---|---|
| Screw diameter | 30 mm |
| Screw length | 25 D |
| Annular die size | 60 mm |
| Die gap | 1.2 mm |
| Melt temperature | 200°C |
| Blow-up ratio | 2.5 |
| Film thickness | 50 µm |
| Output rate | 5 kg/hr |

Each monofilm has a nominal film thickness of 50 microns.

The haze and gloss are measured using the methods identified above and the results are shown in Table 12.

**Table 12**

| | Haze (%) | 45° Gloss |
|---|---|---|
| Comparative Film D | 11.6 | 56.3 |
| Inventive Film 7 | 7.1 | 69 |
| Inventive Film 8 | 13 | 40 |

The heat seal strengths of the films are measured using the method identified above and the results are shown in Table 13. The units are N/15 mm.

**Table 13**

| | Comparative Film D | Inventive Film 7 | Inventive Film 8 |
|---|---|---|---|
| 95° C | 0.126 | | |
| 100° C | 0.237 | 0.123 | |
| 105° C | 1.127 | 0.336 | 0.162 |
| 110° C | 9.3 | 1.356 | 0.48 |
| 115° C | 10.1 | 3.956 | 1.417 |
| 120° C | 10.221 | 9.809 | 2.955 |
| 130° C | 10.442 | 9.717 | 6.576 |
| 140° C | 11.891 | 10.261 | 8.183 |
| 150° C | 11.556 | 10.484 | 8.954 |
| 160° C | 10.791 | 11.202 | 9.26 |
| 170° C | 10.899 | 12.173 | 9.745 |
| 180° C | 11.309 | 12.001 | 10.118 |
| 190° C | 11.882 | 12.149 | 11.937 |
| 200° C | 11.761 | 12.176 | 13.029 |

From the heat seal strength data in Table 13, Comparative Film D has a 50% seal strength temperature of ∼108° C while Inventive Film 7 and 8 exhibit 50% seal strengths that are at least 10° C greater. While Inventive Films 7 and 8 are formed using a linear low density polyethylene, similar effects on thermal resistance are expected when using the bisamide additives with polyethylenes having higher densities.

## Claims

1. A multilayer film comprising an outer layer, wherein the outer layer means that one surface of the outer layer is an outermost surface of the film, the outer layer comprising:
a polyethylene having a density of 0.930 g/cm³ or greater; and
0.01 to 1 weight percent of an additive based on the total weight of the outer layer, the additive comprising:
(i) a sorbitol acetal derivative comprising the structure of formula (I): 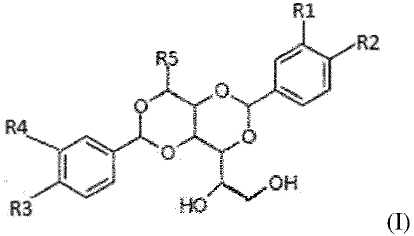 wherein R1-R5 comprise the same or different moieties chosen from hydrogen and a C₁-C₃ alkyl; or
(ii) a bisamide comprising a structure of formulas (II), (III), or (IV): 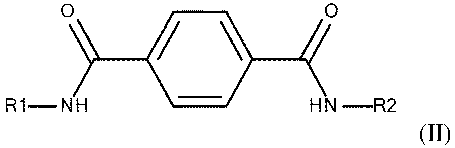 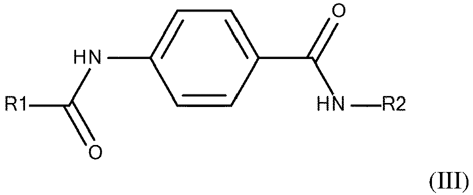 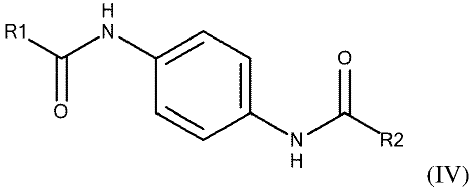
wherein R1 and R2 in formulas (II), (III), and (IV) comprise the same or different moieties chosen from: C₁-C₂₀ alkyl unsubstituted or substituted by one or more hydroxy; C₄-C₂₀ alkenyl unsubstituted or substituted by one or more hydroxy; C₂-C₂₀ alkyl interrupted by oxygen or sulfur; C₃-C₁₂ cycloalkyl unsubstituted or substituted by one or more C₁-C₂₀ alkyl; (C3-C₁₂ cycloalkyl)-C₁-C₁₀ alkyl unsubstituted or substituted by one or more C₁-C₂₀ alkyl; bis[C₃-C₁₂ cycloalkyl]-C₁-C₁₀ alkyl unsubstituted or substituted by one or more C₁-C₂₀ alkyl; a bicyclic or tricyclic hydrocarbon radical with 5 to 20 carbon atoms unsubstituted or substituted by one or more C₁-C₂₀ alkyl; phenyl unsubstituted or substituted by one or more radicals selected from C₁-C₂₀ alkyl, C₁-C₂₀ alkoxy, C₁-C₂₀ alkylamino, di(C₁-C₂₀ alkyl)amino, hydroxy and nitro; phenyl-C₁-C₂₀ alkyl unsubstituted or substituted by one or more radicals selected from C₁-C₂₀ alkyl, C₃-C₁₂ cycloalkyl, phenyl, C₁-C₂₀ alkoxy and hydroxy; phenylethenyl unsubstituted or substituted by one or more C₁-C₂₀ alkyl; biphenyl-(C₁-C₁₀ alkyl) unsubstituted or substituted by one or more C₁-C₂₀ alkyl; naphthyl unsubstituted or substituted by one or more C₁-C₂₀ alkyl;
naphthyl-C₁-C₂₀ alkyl unsubstituted or substituted by one or more C₁-C₂₀ alkyl;
naphthoxymethyl unsubstituted or substituted by one or more C₁-C₂ alkyl;
biphenylenyl, flourenyl, anthryl; a 5-to-6-membered heterocylic radical unsubstituted or substituted by one or more C₁-C₂₀ alkyl; a C₁-C₂₀ hydrocarbon radical containing one or more halogen; or tri(C₁-C₁₀ alkyl)silyl(C₁-C₁₀ alkyl) dibenzylidene sorbitol;
wherein the outer layer has a 50% seal strength temperature at least 10° C greater than an outer layer in a comparative film that differs only in the absence of the additive in the outer layer, when sealed to itself at a pressure of 5 bar with a dwell time of 0.5 seconds; and
wherein the film has a gloss of at least 30 at 45° as measured based on ASTM D2457; wherein density and seal strength are measured in accordance with the description.

2. The multilayer film of claim 1, wherein the polyethylene comprises linear low density polyethylene, medium density polyethylene, high density polyethylene, or a combination thereof.

3. The multilayer film of claim 1 or claim 2, wherein the total amount of polyethylene having a density of 0.930 g/cm³ or greater in the outer layer is at least 50 weight percent of the outer layer.

4. The multilayer film of any of the preceding claims, further comprising at least one additional layer comprising a second polyethylene.

5. The multilayer film of any of the preceding claims, wherein the outer layer further comprises an antioxidant, a colorant, an antistatic agent, a slip agent, an antiblock, a UV stabilizing agent, an antifog agent, a processing aid, a mold-release agent, and combinations thereof.

6. The multilayer film of any of the preceding claims, wherein an outer surface of the film is printed.

7. The multilayer film of any of the preceding claims, wherein the film has a haze of 30% or less as measured based on ASTM D1003.

8. A package comprising the multilayer film of any the preceding claims.

9. The package of claim 8, wherein the package is formed with heat seal packaging equipment utilizing continuously heated seal bars.

10. A stand-up pouch comprising the multilayer film of any of claims 1-7.

11. A shrink film comprising the multilayer film of any of claims 1-7.

12. A stretch hood film comprising the multilayer film of any of claims 1-7.

## Patentansprüche

1. Mehrschichtiger Film, umfassend eine äußere Schicht, wobei die äußere Schicht bedeutet, dass eine Oberfläche der äußeren Schicht eine äußerste Oberfläche des Films ist, die äußere Schicht umfassend:
ein Polyethylen, das eine Dichte von 0,930 g/cm³ oder mehr aufweist; und
zu 0,01 bis 1 Gew.-% ein Additiv basierend auf dem Gesamtgewicht der äußeren Schicht, das Additiv umfassend:
(i) ein Sorbitolacetalderivat, umfassend die Struktur der Formel (I): 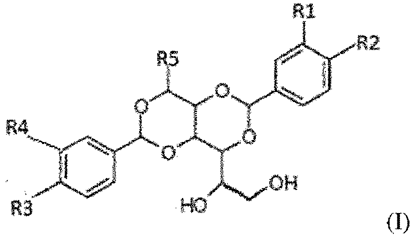 wobei R1-R5 die gleichen oder verschiedene Anteile umfassen, ausgewählt aus Wasserstoff und einem C₁-C₃-Alkyl; oder
(ii) ein Bisamid, umfassend eine Struktur der Formeln (II), (III), oder (IV): 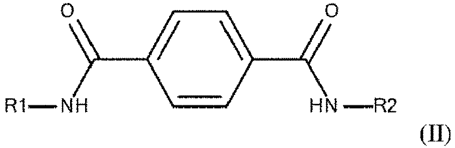 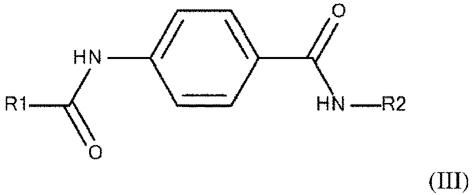 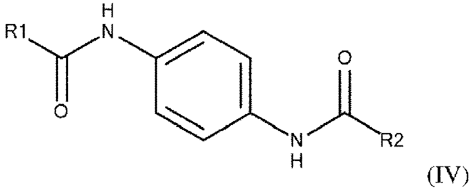
wobei R1 und R2 in den Formeln (II), (III) und (IV) die gleichen oder verschiedene Anteile umfassen, ausgewählt aus: C₁-C₂₀-Alkyl, unsubstituiert oder substituiert durch ein oder mehrere Hydroxy; C₄-C₂₀-Alkenyl, unsubstituiert oder substituiert durch ein oder mehrere Hydroxy; C₂-C₂₀-Alkyl, unterbrochen durch Sauerstoff oder Schwefel; C₃-C₁₂-Cycloalkyl, unsubstituiert oder substituiert durch ein oder mehrere C₁-C₂₀-Alkyl; (C3-C₁₂ Cycloalkyl)-C₁-C₁₀-Alkyl, unsubstituiert oder substituiert durch ein oder mehrere C₁-C₂₀-Alkyl; Bis[C₃-C₁₂-Cycloalkyl]-C₁-C₁₀-Alkyl, unsubstituiert oder substituiert durch ein oder mehrere C₁-C₂₀-Alkyl; einem bicyclischen oder tricyclischen Kohlenwasserstoffrest mit 5 bis 20 Kohlenstoffatomen, unsubstituiert oder substituiert durch ein oder mehrere C₁-C₂₀-Alkyl; Phenyl, unsubstituiert oder substituiert durch einen oder mehrere Reste, ausgewählt aus C₁-C₂₀-Alkyl, C₁-C₂₀-Alkoxy, C₁-C₂₀-Alkylamino, Di(C₁-C₂₀-Alkyl)amino, Hydroxy und Nitro; Phenyl-C₁-C₂₀-Alkyl, unsubstituiert oder substituiert durch einen oder mehrere Reste, ausgewählt aus C₁-C₂₀-Alkyl, C₃-C12-Cycloalkyl, Phenyl, C₁-C₂₀-Alkoxy und Hydroxy; Phenylethenyl, unsubstituiert oder substituiert durch ein oder mehrere C₁-C₂₀-Alkyl; Biphenyl-(C₁-C₁₀-Alkyl), unsubstituiert oder substituiert durch ein oder mehrere C₁-C₂₀-Alkyl; Naphthyl, unsubstituiert oder substituiert durch ein oder mehrere C₁-C₂₀-Alkyl; Naphthyl-C₁-C₂₀-Alkyl, unsubstituiert oder substituiert durch ein oder mehrere C₁-C₂₀-Alkyl; Naphthoxymethyl, unsubstituiert oder substituiert durch ein oder mehrere C₁-C₂-Alkyl; Biphenylenyl, Flourenyl, Anthryl; einem 5- bis 6-gliedrigen heterocyclischen Rest, unsubstituiert oder substituiert durch ein oder mehrere C₁-C₂₀-Alkyl; einem C₁-C₂₀-Kohlenwasserstoffrest, der ein oder mehrere Halogene enthält; oder Tri(C₁-C₁₀-alkyl)silyl(C₁-C₁₀-alkyl)dibenzylidensorbitol-,
wobei die äußere Schicht eine 50 %ige Siegelfestigkeitstemperatur aufweist, die mindestens 10 °C höher ist als die einer äußeren Schicht in einem Vergleichsfilm, der sich nur durch das Fehlen des Additivs in der äußeren Schicht unterscheidet, wenn er bei einem Druck von 5 Bar mit einer Verweilzeit von 0,5 Sekunden an sich selbst gesiegelt wird; und
wobei der Film einen Glanz von mindestens 30 bei 45° aufweist, gemessen basierend auf ASTM D2457; wobei die Dichte und die Siegelfestigkeit gemäß der Beschreibung gemessen werden.

2. Mehrschichtiger Film nach Anspruch 1, wobei das Polyethylen lineares Polyethylen niedriger Dichte, Polyethylen mittlerer Dichte, Polyethylen hoher Dichte oder eine Kombination davon umfasst.

3. Mehrschichtiger Film nach Anspruch 1 oder 2, wobei die Gesamtmenge an Polyethylen, das eine Dichte von 0,930 g/cm³ oder mehr in der äußeren Schicht aufweist, mindestens 50 Gew.-% der äußeren Schicht beträgt.

4. Mehrschichtiger Film nach einem der vorstehenden Ansprüche, ferner umfassend mindestens eine zusätzliche Schicht, umfassend ein zweites Polyethylen.

5. Mehrschichtiger Film nach einem der vorstehenden Ansprüche, wobei die äußere Schicht ferner ein Antioxidationsmittel, ein Farbmittel, ein antistatisches Mittel, ein Gleitmittel, ein Antiblockmittel, ein UV-Stabilisierungsmittel, ein Antibeschlagmittel, ein Verarbeitungshilfsmittel, ein Formtrennmittel und Kombinationen davon umfasst.

6. Mehrschichtiger Film nach einem der vorstehenden Ansprüche, wobei eine äußere Oberfläche des Films bedruckt ist.

7. Mehrschichtiger Film nach einem der vorstehenden Ansprüche, wobei der Film eine Trübung von 30 % oder weniger aufweist, gemessen basierend auf ASTM D1003.

8. Verpackung, umfassend den mehrschichtigen Film nach einem der vorstehenden Ansprüche.

9. Verpackung nach Anspruch 8, wobei die Verpackung mit einer Heißsiegel-Verpackungsanlage unter Verwendung von kontinuierlich beheizten Siegelträgern ausgebildet wird.

10. Standbeutel, umfassend den mehrschichtigen Film nach einem der Ansprüche 1-7.

11. Schrumpffilm, umfassend den mehrschichtigen Film nach einem der Ansprüche 1-7.

12. Stretchhaubenfilm, umfassend den mehrschichtigen Film nach einem der Ansprüche 1-7.

## Revendications

1. Film multicouche comprenant une couche externe, dans lequel la couche externe signifie qu'une surface de la couche externe est une surface la plus externe du film, la couche externe comprenant :
un polyéthylène ayant une masse volumique égale ou supérieure à 0,930 g/cm³ ; et
0,01 à 1 pour cent en poids d'un additif sur la base du poids total de la couche externe, l'additif comprenant :
(i) un dérivé acétal de sorbitol comprenant la structure de formule (l) : 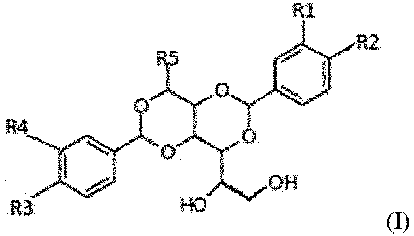 dans laquelle R1-R5 comprennent des fragments identiques ou différents choisis parmi hydrogène et un alkyle en C₁ à C₃ ; ou
(ii) un bisamide comprenant une structure de formules (II), (III) ou (IV) : 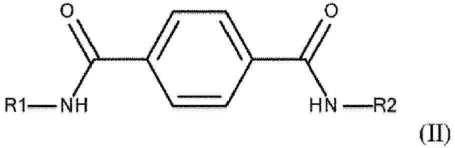 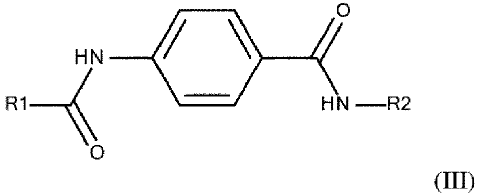 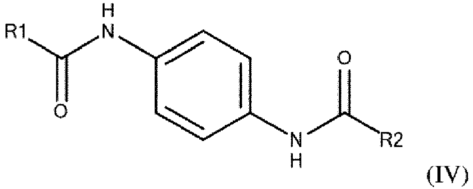
dans lesquelles R1 et R2 dans les formules (II), (III) et (IV) comprennent des fragments identiques ou différents choisis parmi : alkyle en C₁ à C₂₀ non substitué ou substitué par un ou plusieurs hydroxy ; alcényle en C₄ à C₂₀ non substitué ou substitué par un ou plusieurs hydroxy ; alkyle en C₂ à C₂₀ interrompu par oxygène ou soufre ; cycloalkyle en C₃ à C₁₂ non substitué ou substitué par un ou plusieurs alkyles en C₁ à C₂₀ ; cycloalkyl en (C₃ à C₁₂)-alkyle en C₁ à C₁₀ non substitué ou substitué par un ou plusieurs alkyles en C₁ à C₂₀ ; bis[cycloalkyl en C₃ à C₁₂]-alkyle en C₁ à C₁₀ non substitué ou substitué par un ou plusieurs alkyles en C₁ à C₂₀ ; un radical hydrocarboné bicyclique ou tricyclique ayant 5 à 20 atomes de carbone non substitué ou substitué par un ou plusieurs alkyles en C₁ à C₂₀ ; phényle non substitué ou substitué par un ou plusieurs radicaux choisis parmi alkyle en C₁ à C₂₀, alcoxy en C₁ à C₂₀, alkylamino en C₁ à C₂₀, di(alkyl en C₁ à C₂₀)amino, hydroxy et nitro ; phényl-alkyle en C₁ à C₂₀ non substitué ou substitué par un ou plusieurs radicaux choisis parmi akyle en C₁ à C₂₀, cycloalkyle en C₃ à C₁₂, phényle, alcoxy en C₁ à C₂₀ et hydroxy ; phényléthényle non substitué ou substitué par un ou plusieurs alkyles en C₁ à C₂₀ ; biphényl-(alkyle en C₁ à C₁₀) non substitué ou substitué par un ou plusieurs alkyles en C₁ à C₂₀ ; un naphtyle non substitué ou substitué par un ou plusieurs alkyles en C₁ à C₂₀ ; naphtyl-alkyle en C₁ à C₂₀ non substitué ou substitué par un ou plusieurs alkyles en C₁ à C₂₀ ; naphoxyméthyle non substitué ou substitué par un ou plusieurs alkyles en C₁ à C₂ ; biphénylényle, flourényle, anthryle ; un radical hétérocyclique de 5 à 6 chaînons non substitué ou substitué par un ou plusieurs alkyles en C₁ à C₂₀ ; un radical hydrocarboné en C₁ à C₂₀ contenant un ou plusieurs halogène ; ou tri(alkyl en C₁ à C₁₀)silyl(alkyl en C₁ à C₁₀) dibenzylidène sorbitol ;
dans lequel la couche externe a une température de résistance de scellement à 50 % au moins 10 °C supérieure à une couche externe dans un film comparatif qui diffère uniquement en l'absence de l'additif dans la couche externe, lorsqu'elle est scellée à elle-même à une pression de 5 bars avec un temps de maintien de 0,5 secondes ; et
dans lequel le film a une brillance d'au moins 30 à 45° telle que mesurée sur la base de la norme ASTM D2457 ; dans lequel la densité et la résistance de scellement sont mesurées conformément à la description.

2. Film multicouche selon la revendication 1, dans lequel la polyoléfine comprend du polyéthylène basse densité linéaire, du polyéthylène densité moyenne, du polyéthylène haute densité, ou une combinaison de ceux-ci.

3. Film multicouche selon la revendication 1 ou la revendication 2, dans lequel la quantité totale de polyéthylène ayant une masse volumique égale ou supérieure à 0,930 g/cm³ dans la couche externe est au moins 50 pour cent en poids de la couche externe.

4. Film multicouche selon l'une quelconque des revendications précédentes, comprenant en outre au moins une couche supplémentaire comprenant un second polyéthylène.

5. Film multicouche selon l'une quelconque des revendications précédentes, dans lequel la couche externe comprend en outre un antioxydant, un colorant, un agent antistatique, un agent de glissement, un antibloc, un agent de stabilisation aux UV, un agent antibuée, un auxiliaire de traitement, un agent de démoulage, et des combinaisons de ceux-ci.

6. Film multicouche selon l'une quelconque des revendications précédentes, dans lequel une surface externe du film est imprimée.

7. Film multicouche selon l'une quelconque des revendications précédentes, dans lequel le film a un trouble égal ou inférieur à 30 % tel que mesuré sur la base de la norme ASTM D1003.

8. Emballage comprenant le film multicouche selon l'une quelconque des revendications précédentes.

9. Conditionnement selon la revendication 8, dans lequel le conditionnement est formé avec un équipement de conditionnement à thermoscellage en utilisant des barres de scellement chauffées en continu.

10. Sachet à maintien vertical comprenant le film multicouche selon l'une quelconque des revendications 1 à 7.

11. Film rétrécissable comprenant le film multicouche selon l'une quelconque des revendications 1 à 7.

12. Film de housse étirable comprenant le film multicouche selon l'une quelconque des revendications 1 à 7.
